# EUROPEAN PATENT APPLICATION

(11) **EP 2 099 241 A1**
(43) Date of publication of application: **09.09.2009**
(21) Application number: 08380067.2
(22) Date of filing: 05.03.2008
(51) Int. Cl.: H04W 4/00

(54) **Method for improving the security in gsm networks**

(71) Applicant: Vodafone Group PLC, Newbury Berkshire RG14 2FN (GB); Vodafone España, S.A., 28108 Alcobendas (ES)
(72) Inventor: The designation of the inventor has not yet been filed
(74) Representative: Carvajal y Urquijo, Isabel

(57) **Abstract**

Method for improving the security in GSM networks, especially to GSM networks implementing the A5/1 ciphering protocol which comprises, at least:
(A) a first method for the reduction of predictable information, in order to reduce the amount of known information available to the hacker, thus increasing the number of messages/calls time recorded needed by the hacker in order to decipher A5/1 key;
(B) a second method for call tracking.

## Description

### Object of the invention

The object of the present invention is the implementation of a method that improves the security in the networks under the A5.1 GSM ciphering protocol. These countermeasures are implemented in order to make more difficult for a hacker to decipher A5.1 GSM communication, both in signaling phase (through plaintext decryption) or in the traffic phase (through ciphertext decryption).

### Technical field of the invention

The technical field of the invention is the communications systems and more concretely the countermeasures against security violations in the A5.1 GSM protocol.

### Background of the invention

Several academic papers claim that GSM voice ciphering (A5/1) can be cracked. Up to now, this threat has been considered in the past just an academic topic due to the high cost needed to implement the systems necessary to perform the attacks. The introduction of FPGA (Fully Programmable Gate Arrays) processing may decrease the cost to the point of translating academic analysis into a real and widely affordable eavesdropping. A typical attack consists in three steps, these steps comprising, at least:
- The pre-analysis of the data base, wherein the hackers preprocess the information needed to decode A5/1 with limited resources.
- With a RF monitoring system the hackers collect radio information.
- Using the preprocessed data, hackers claim that they can attack A5.1 with a low cost FPGA based system.

If the attacker wants to intercept a specific user, hacking system complexity will be reduced if mobile identity is known before call is initiated. Otherwise the attacker must store all the information sent in the network and make an analysis afterwards.

In the patent application *Improving Security in telecommunication system* of Vodafone Group PLC it is described a method of providing security in communications between a device and a telecommunications network node, the method including encrypting a communication session transmitted on a first communication channel using a key, and causing the communication session to change to a second communication channel at a predetermined time.

### Summary of the invention

In order to avoid the aforementioned problems, three different countermeasures are implemented in the networks in order to make it more difficult for a hacker to decipher an A5/1 GSM communication, both in signaling phase or in the traffic phase:
- Immediate signaling traffic reallocation, making it more difficult for the hacker to track the call in the signaling phase, which is the most useful one for the hacker. When a user sends the first ciphered message, the network will immediately send a request to perform a handover to another channel, which will not be known by the attacker.
- Reduction of amount of information that can be predicted by the hacker. Different techniques will be used depending on the direction of the messages (uplink or downlink).
- Intelligent periodic traffic reallocation after signaling phase through intracell handovers and HCS (hierarchical cell structure) will be performed in order to avoid call tracking by the hacker, even if all frequencies are monitored. The hacker will not be able to collect enough information to perform an attack based on traffic channels. This, jointly with the previous solutions, would deter/avoid the eavesdropping even if the hacker is able to record all frequencies/channels.

These countermeasures make a complement and an enhancement to others already filed, as:
- They provide a protection not only during traffic phase but also during signalling phase
- They provide a protection during traffic phase even if the hacker is able to record all frequencies / channels.

### Brief description of the drawings

Following, it is briefly described some figures that helps to better understand the invention. The figures also describe an embodiment of the present invention, as non-imitative example:
Figure 1.- Shows a ciphered message structure in GSM protocol.
Figure 2.- Shows a implementation of countermeasures for call tracking.

### Preferred embodiment of the invention

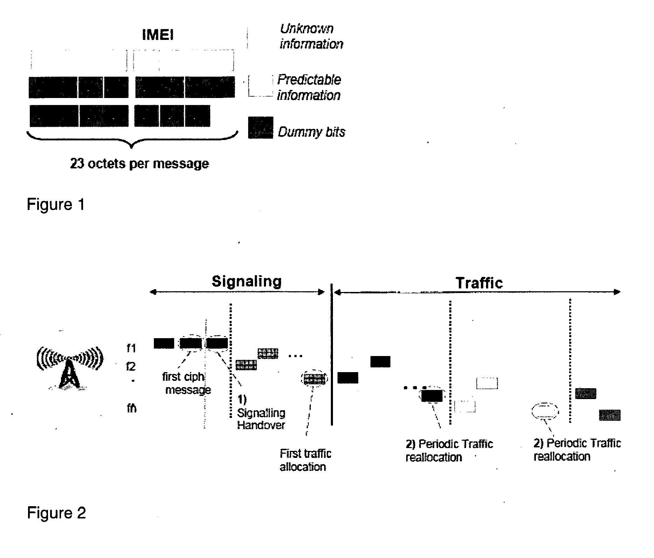

The method to implement countermeasures against attacks on the A5/1 GSM ciphering protocol consists in the implementation of, at least, one of the following sub-methods:
(A) a first method for the reduction of predictable information, in order to reduce the amount of known information available to the hacker, thus increasing the number of messages/calls time recorded needed by the hacker in order to decipher A5/1 key; said method further comprising, at least:
   - a method of randomization of dummy bits sent in any message in the GSM air interface ; and
   - a method for increasing the optional information.
(B) a second method for call tracking as can be shown in figure 2, where the effect of this countermeasure will highly depend on the amount of messages needed to crack the A5/1 ciphering protocol, the aforementioned first method aims to make this amount as big as possible, hence there is a multiplicative effect on the combination of different countermeasures; said second method further comprising, at least:
   - a method for signaling handover (21), where right after the first ciphered message is received in the network, while still in the signaling phase, the user will be reallocated to another channel, either on the same or another cell while the uncertainty will increase if it is done to another cell;
   - a method for periodic traffic reallocations (22), which is possible through forced periodic intra-cell handovers, immediate assignment would also be helpful, but optional. This method will be useful if the attacker has not captured enough SDCCH information to decode the A5/1 key in the beginning of the call.

Said first method is based on call set up plain text, the plain text including two types of information that can be used by the hacker (figure 1):
- Dummy bits (10) that the bits with pre-defined values reserved for future applications by the protocol; and
- Predictable information (11) included in the message, e.g. protocol fixed information.

The telecommunication system, that is a second object of the present invention, including a device, a telecommunications network node, and:
- means for the reduction of predictable information in the signaling traffic at the beginning of a call, further comprising:
   - means for the randomization of the dummy bits included in the call; and
   - means for increasing the optional information in the call;
- means for call tracking, further comprising:
   - means for the signaling handover; and
   - means for periodic traffic reallocations.

## Claims

1. Method for improving the security in GSM networks, especially to GSM networks implementing the A5/1 ciphering protocol **characterized in that** it comprises, at least:
(A) a first method for the reduction of predictable information, in order to reduce the amount of known information available to the hacker, thus increasing the number of messages/calls time recorded needed by the hacker in order to decipher A5/1 key;
(B) a second method for call tracking;
**characterized also in that**
the effect of the second method depends on the amount of messages needed to crack the A5/1 ciphering protocol;
**and also in that**
the aforementioned first method makes the amount of messages as big as possible, hence there is a multiplicative effect on the combination of said first and second method.

2. A method of claim 1 **characterized in that** said first method further comprising, at least:
- a method of randomization of dummy bits sent in any message in the GSM air interface; and
- a method for increasing the optional information to be sent by the mobile to the network.

3. A method of claim 1 and 2 **characterized in that** said second method further comprising, at least:
- a method for signaling handover (21), where right after the first ciphered message(ciphering mode complete), while still in the signaling phase, the user will be reallocated to another signaling channel;
- a method for periodic traffic reallocations (22), which is possible through forced periodic intra-cell handovers.

4. A method of claims 1 to 3 **characterized in that** in the signaling handover (21) the user will be reallocated to another signaling channel, either on the same or another cell while the uncertainty will increase if it is done to another cell.

5. A telecommunication system including a device, a telecommunications network node and **characterized in that** it further comprises, at least:
- means for the reduction of predictable information in the signaling traffic at the beginning of a call, further comprising:
- means for the randomization of the dummy bits included in the call; and
- means for increasing the optional information in the call;
- means for call tracking, further comprising:
- means for the signaling handover; and
- means for periodic traffic reallocations.
